**Europäisches Patentamt**

**European Patent Office**

**Office européen des brevets**

(19)

(11) Veröffentlichungsnummer: **0 124 544 B1**

(12) **EUROPÄISCHE PATENTSCHRIFT**

(45) Veröffentlichungstag der Patentschrift:
**28.01.87**

(51) Int. Cl.⁴: **G 01 C 21/12**

(21) Anmeldenummer: **83903294.3**

(22) Anmeldetag: **21.10.83**

(86) Internationale Anmeldenummer:
**PCT/DE 83/00177**

(87) Internationale Veröffentlichungsnummer:
**WO 84/01823 (10.05.84 Gazette 84/12)**

(54) **VERFAHREN UND VORRICHTUNG ZUR ZIELFÜHRUNG VON LANDFAHRZEUGEN.**

(30) Priorität: **06.11.82 DE 3241023**

(43) Veröffentlichungstag der Anmeldung:
**14.11.84 Patentblatt 84/46**

(45) Bekanntmachung des Hinweises auf die Patenterteilung:
**28.01.87 Patentblatt 87/5**

(84) Benannte Vertragsstaaten:
**AT CH DE FR GB LI SE**

(56) Entgegenhaltungen:
**EP - A - 0 036 119**
**US - A - 4 032 758**
**US - A - 4 084 241**

(73) Patentinhaber: **ROBERT BOSCH GMBH, Postfach 50, D-7000 Stuttgart 1 (DE)**

(72) Erfinder: **FREIENSTEIN, Bernd, Butterborn 68, D-3200 Hildesheim (DE)**
Erfinder: **NEUKIRCHNER, Ernst, Peter, A.d. Christuskirche 15, D-3200 Hildesheim (DE)**
Erfinder: **PILSAK, Otmar, Gneisenaustr. 7, D-3200 Hildesheim (DE)**
Erfinder: **SCHLÖGL, Dietmar, Lange Halbe 19, D-3226 Sibesse (DE)**

## Beschreibung

### Stand der Technik

Verfahren und Vorrichtungen zur Zielführung von Fahrzeugen auf dem Lande sind bereits vielfach bekannt geworden. Die DE-OS 2 925 656 beschreibt beispielsweise ein Verfahren zur Zielführung von Fahrzeugen in stark vermaschten Stadtstrassennetzen unter Verwendung eines im wesentlichen fahrzeugautonomen Systems. An bestimmten Stellen im Strassennetz werden zwischen dem Fahrzeug und der Strassenstation Informationen ausgetauscht, die es dem Bordrechner im Fahrzeug ermöglichen, Position und Richtung des Fahrzeuges zu bestimmen. Der weitere Fahrweg und die weitere Fahrtrichtung wird dann durch eine Erfassung und Auswertung der Radumdrehungen ermittelt. Verfahren und Vorrichtungen zur Bestimmung von Fahrtwinkel und Fahrtstrecke sind beispielsweise aus dem Artikel von T. Tsumura und N. Fujiwara, an experimental system for processing movement information of vehicle, Twenty-Eighth IEEE Vehicular Technology Conference, Conference Record of Papers, Seite 163 bis 168 und durch den Artikel von Jon H. Myer, A Vehicular Planimetric Dead-Reckoning Computer, IEEE Transactions on Vehicular Technology, Vol. 20, No. 2, August 1971, Seite 62 bis 68 bekannt. Bei den bekannten Verfahren wird die Fahrtstrecke aus der Summe der Radumdrehungen des linken und rechten Rades und der Fahrtwinkel aus der Differenz der Umdrehungen des rechten und des linken Rades ermittelt. Es hat sich nun gezeigt, dass insbesondere bei der Bestimmung des Fahrtwinkels Fehler auftreten, die dann nicht vernachlässigbar sind, wenn zwischen den Strassenstationen grosse Abstände auftreten oder wenn der Fahrer von der vorgegebenen Route abweicht und dadurch längere Zeit nicht zu einer Strassenstation gelangt. Aufgrund der additiven Verfälschung der Winkelwerte des fahrzeugautonomen Ortungs- und Navigationssystems ist es dann nicht mehr möglich, dem Fahrer Hinweise zu geben, mit denen er das gewünschte Ziel sicher und schnell erreichen kann.

### Vorteile der Erfindung

Das erfindungsgemässe Verfahren bzw. die Vorrichtung mit den Merkmalen der Ansprüche 1 und 2 haben demgegenüber den Vorteil, dass auch bei längeren Fahrten ohne Synchronisation durch die Strassenstationen Ortungsfehler nicht auftreten. Daraus ergibt sich der weitere Vorteil, dass Strassenstationen in grösserem Abstand aufgestellt sein können. Als weiterer Vorteil ist anzusehen, dass auch nach längeren Fahrten Ortungsfehler nicht auftreten. Als weiterer Vorteil ergibt sich, dass auch der Einfluss der Geschwindigkeit und der Querbeschleunigung des Fahrzeuges auf die Ortung vernachlässigbar ist.

### Zeichnung

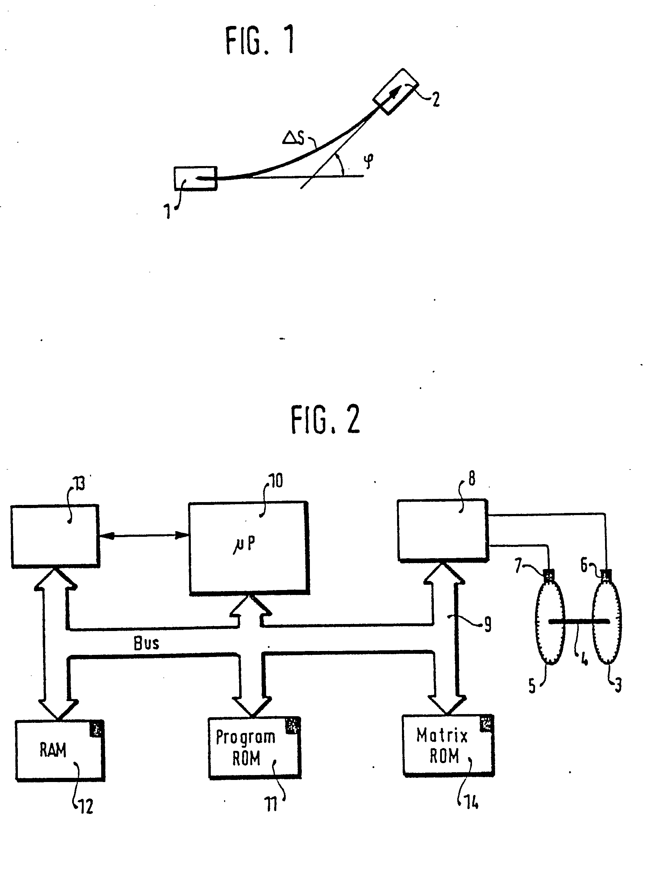

Ein Ausführungsbeispiel der Erfindung ist in der Zeichnung dargestellt und in der nachfolgenden Beschreibung näher erläutert. Es zeigen Figur 1 eine Darstellung zur Erläuterung des Ortungssystems und Fig. 2 eine erfindungsgemässe Vorrichtung eines Ortungssystems für Landfahrzeuge.

### Beschreibung des Ausführungsbeispiels

Verfahren zur Ortung von Landfahrzeugen mittels Koppelnavigation nach dem planimetrischen Verfahren sind seit langem bekannt. In diesem Zusammenhang wird auf den in der Einleitung genannten Stand der Technik verwiesen. Die Ermittlung von Fahrtweg und Fahrtrichtung erfolgt bei den bekannten Verfahren durch Erfassung und Auswertung der Radumdrehungen einer vorzugsweise nicht angetriebenen Fahrzeugachse. Impulsgeber an den Rädern dieser Achse erzeugen pro Radumdrehung Impulse, die vom Ortungssystem gezählt werden und aus denen die Positionsänderungen des Fahrzeuges berechnet wird. Fährt beispielsweise ein Fahrzeug in Figur 1 vom Platz 1 zum Platz 2, so bestimmt sich die Fahrtstrecke $\Delta S$ nach der Gleichung

$$\Delta S = \frac{Z_R + Z_L}{2} \cdot \frac{U}{Z},$$

wobei $Z_R$ die Impulszahl ist, die am rechten Rad abgegriffen ist, und $Z_L$ die Impulszahl, die am linken Rad abgegriffen wird. $Z$ gibt die Zahl der Impulse pro Rad und Umdrehung an und mit $U$ ist der Radumfang definiert. Der Fahrtwinkel $\varphi$ berechnet sich nach der Gleichung

$$\varphi = \frac{Z_R + Z_L}{b} \cdot \frac{U}{Z},$$

wobei als weiterer Wert die Spurweite $b$ des Fahrzeuges von Bedeutung ist.

Bei Kurvenfahrten ist die bei der zweiten Gleichung als konstant angenommene Spurweite $b$ jedoch nicht gleichbleibend, da die Auflageflächen der Reifen des Fahrzeuges sich bei der Kurvenfahrt in Abhängigkeit von der Fahrtgeschwindigkeit relativ zueinander verschieben. Daraus ergeben sich Verfälschungen der Impulsdifferenzen $Z_R - Z_L$ und infolgedessen Ortungsfehler. Diese Fehler können dadurch beseitigt werden, in dem der ermittelte Fahrtwinkel $\varphi$ mit einem Wert $K$ korrigiert wird. Der Wert $K$ ist ein Faktor, der üblicherweise im Bereich von 0,5 bis 2 liegt und abhängig ist von der Geschwindigkeit des Fahrzeuges und vom Kurvenradius. Damit hängt er von den Querkräften ab, die auf das Fahrzeug wirken. Die Geschwindigkeit des Fahrzeuges und der Kurvenradius des Fahrzeuges lassen sich mit den bereits ermittelten Grössen bestimmen. Hierbei ist der Kurvenradius proportional zur Impulssumme geteilt durch die Impulsdifferenz. Die Geschwindigkeit des Fahrzeuges bestimmt sich aus der Impulssumme und der Fahrtzeit bis zum Erreichen einer vorgegebenen Impulssumme. Aus diesen Werten kann der Wert $K$ ermittelt werden und zur Korrektur des Fahrtwinkels dienen.

Die Fehlerkorrektur erfolgt nun dadurch, dass die gemessenen Impulsdifferenzen durch einen korrigierten Wert ersetzt werden, der, wie oben beschrieben, von Geschwindigkeit und Kurvenradius abhängig ist.

Die ermittelten Korrekturwerte sind vom Fahrzeugtyp abhängig.

Ein konkretes Ausführungsbeispiel, bei dem auf einfache Art und Weise fahrzeugspezifische Eigenschaften zu berücksichtigen sind, ist in Figur 2 dargestellt. Schematisch ist die nicht angetriebene Fahrzeugachse 4 eines Fahrzeuges dargestellt. Am rechten und linken Rad dieser Achse sind Zahnkränze 3 und 5 angebracht. Die Zahnkränze 3, 5 wirken auf Impulsgeber 6 und 7. Die Signale der Impulsgeber 6, 7 werden zu einer Geberauswerteschaltung 8 geführt, die im genannten Stand der Technik ausführlich beschrieben ist. Die Geberauswerteschaltung wandelt die Signale in digitale Signale um, die von einer Recheneinrichtung 10 leicht bearbeitbar sind. Die Recheneinrichtung 10, die als Mikroprozessor ausgebildet ist, steht über eine Busleitung 9 mit der Geberauswerteschaltung 8, einem Programm-ROM 11, einem RAM 12, einem Matrix-ROM 14 und einem Timer 13 in Verbindung.

Die Impulsgeber 6 und 7 liefern die Impulse, die zur Bestimmung der Fahrtstrecke und der Fahrtrichtung notwendig sind. Diese Impulse werden in der Geberauswerteschaltung 8 aufbereitet, so dass sie vom Mikroprozessor 10 leicht verarbeitbar sind. Die Verarbeitung durch den Mikroprozessor erfolgt durch ein Programm, welches im Programm-ROM 11 abgelegt ist. Das RAM 12 dient in diesem Zusammenhang zur Speicherung der Daten, beispielsweise Fahrtrichtung und Fahrtweg, die vom Mikroprozessor berechnet worden sind. Die Fahrtrichtung und der Fahrtweg werden dabei z.B. nach den eingangs genannten Gleichungen bestimmt. Zur Messung der Fahrtzeit dient der Timer 13. Die Fehlerkorrektur erfolgt nun dadurch, dass die gemessenen Impulsdifferenzen $Z_R - Z_L$ durch Werte ersetzt werden, die in einer dreidimensionalen Korrekturmatrix enthalten sind. Die dreidimensionale Korrekturmatrix ist in dem Matrix-ROM 14 abgelegt. Das jeweilige Matrixelement wird aufgrund der gemessenen Impulsdifferenz zwischen beiden Rädern, der Impulssumme und einer Zeit bestimmt, die zur Erfassung der jeweiligen Impulssumme benötigt wird und durch den Timer 13 ausgezählt wird. In Abhängigkeit von diesen drei Grössen wird ein entsprechendes Matrixelement aufgerufen und diesem der Wert K zugewiesen. Der exakte Fahrtwinkel wird nunmehr erhalten, in dem der ursprünglich berechnete Fahrtwinkel um den Faktor K korrigiert wird. Vorteilhafterweise erfolgt dies dadurch, dass der Wert $Z_R - Z_L$ durch einen neuen Wert ersetzt wird, der aus dem Matrix-ROM 14 entnommen ist.

Die Ermittlung der Matrixelemente erfolgt entweder empirisch in Fahrtversuchen oder wird aufgrund der unterschiedlichen Fahrzeug-, Fahrwerk- und Reifentypen berechnet. Durch die Fehlerkorrektur mittels eines Matrix-ROM's ist es möglich, die Ortungsvorrichtung für alle Fahrzeuge zu verwenden. Bei unterschiedlichen Fahrzeugtypen ist es lediglich erforderlich, ein Matrix-ROM zu wählen, das auf den entsprechenden Fahrzeugtyp abgestimmt ist. Dadurch ist es möglich, Ortungsfehler in Abhängigkeit von der Fahrtgeschwindigkeit und von der nicht konstanten Spurweite bei Kurvenfahrten zu korrigieren.

## Patentansprüche

1. Verfahren zur Ortung von Landfahrzeugen mittels Koppelnavigation nach dem planimetrischen Verfahren, wobei der Fahrtweg und die Fahrtrichtung durch Erfassung und Auswertung der Radumdrehungen der Räder einer Fahrzeugachse bestimmt werden, dadurch gekennzeichnet, dass bei der Bestimmung der Fahrtrichtung ein Korrekturfaktor berücksichtigt wird, der von der Summe der Radumdrehungen und der Differenz der Radumdrehungen beider Räder und der Zeit für eine bestimmte Menge von Radumdrehungen abhängt.

2. Vorrichtung zur Ortung von Landfahrzeugen mittels Koppelnavigation nach dem Verfahren nach Anspruch 1, mit Impulsgebern, die die bei der Drehung der Räder auftretenden Signale aufnehmen und mit Rechenvorrichtungen, die aufgrund des Signals der einzelnen Geber auf der linken und rechten Seite der Fahrzeugachse die Fahrtstrecke und die Fahrtrichtung bestimmen, dadurch gekennzeichnet, dass Mittel (14) vorhanden sind, mit denen das Fahrtrichtungssignal in Abhängigkeit von der Umdrehungszahl eines Rades und der Umdrehungsdifferenz beider Räder und der Zeit für eine bestimmte Menge von Radumdrehungen korrigierbar ist.

3. Vorrichtung nach Anspruch 2, dadurch gekennzeichnet, dass zur Korrektur ein Speicher (14), vorzugsweise ein Matrix-ROM, vorhanden ist, auf das die Rechenvorrichtung (10) in Abhängigkeit von den ermittelten Daten zugreift und die dort abgegriffenen Daten mit dem Ergebnis der Fahrtrichtungsermittlung verknüpft sind.

## Claims

1. Process for the locating of land vehicles by means of compound navigation by the planimetric process, the travelling distance and the travelling direction being determined by the acquisition and evaluation of the wheel revolutions of the wheels of a vehicle axle, characterized in that, in the determination of the travelling direction, a correction factor is taken into account which depends on the sum of the wheel revolutions and the difference between the wheel revolutions of the two wheels and the time for a certain quantity of wheel revolutions.

2. Apparatus for the locating of land vehicles by means of compound navigation by the process according to claim 1, with pulse generators which record the signals occurring upon turning of the wheels and, with calculation devices, determine the travelling distance and the travelling direction on the basis of the signal of the individual generators on the left and right sides of the vehicle axle, characterized in that means (14) are available with which the travelling direction signal can be corrected as a function fo the number of revolutions of a wheel and of the difference in the revolutions of the two wheels and the time for a certain quantity of wheel revolutions.

3. Device according to claim 2, characterized in that a memory (14), preferably a matrix ROM, is available for the correction, is accessed by the calculation device (10) as a function of the data determined and the data retrieved from there are combined with the result of the travelling direction determination.

## Revendications

1. Procédé pour le repérage de véhicules routiers par navigation à l'estime selon le procédé planimétrique, dans lequel le trajet de déplacement et la direction de déplacement du véhicule sont déterminés en détectant et en exploitant les révolutions des roues d'un essieu du véhicule, procédé caractérisé en ce que lors de la détermination de la direction du déplacement, il est tenu compte d'un facteur de correction qui dépend de la somme des révolutions et de la différence des révolutions de deux roues, ainsi que du temps nécessaire pour une quantité déterminée de révolutions.

2. Dipositif pour repérer des véhicules routiers par navigation à l'estime d'après le procédé selon la revendication 1, avec des émetteurs d'impulsions qui captent les signaux se produisant lors de la rotation des roues, et avec des dispositifs de calculs qui sur la base du signal des différents émetteurs sur le côté gauche et le côté droit de l'essieu du véhicule, déterminent l'étendue et la direction du déplacement, dispositif caractérisé en ce qu'il est prévu des moyens (14) grâce auxquels le signal de direction du déplacement est susceptible d'être corrigé en fonction du nombre de révolutions d'une roue et de la différence des révolutions des deux roues, ainsi qu'en fonction du temps nécessaire pour une quantité déterminée de révolutions.

3. Dispositif selon la revendication 2, caractérisé en ce que, il est prévu pour la correction une mémoire (14) de préférence une ROM à matrice, sur laquelle agit le dispositif de calcul (10) en fonction des données déterminées, et des données prélevées sont combinées avec le résultat de la détermination de la direction de déplacement.

# FIG. 1

# FIG. 2